# EUROPEAN PATENT APPLICATION

(11) **EP 3 945 079 A1**
(43) Date of publication of application: **02.02.2022**
(21) Application number: 20188545.6
(22) Date of filing: 30.07.2020
(51) Int. Cl.: C03C 3/078, C03C 1/00, C03C 3/087, C03C 4/02, C03C 14/00, C04B 14/22, C04B 26/14, C04B 26/16, C04B 26/18, B09B 3/00, C04B 111/54

(54) **A GLASS COMPOSITION, A METHOD OF FORMING A GLASS COMPOSITION AND USES OF A GLASS COMPOSITION**

(71) Applicant: Sibelco Nederland N.V., 6223 EP Maastricht (NL)
(72) Inventor: VAN LIMPT, Johannes Alphonsius Christianus, 6223 EP Maastricht (NL)
(74) Representative: Forresters IP LLP

(57) **Abstract**

The present invention relates to a glass composition. The present invention also relates to a method of forming a glass composition. The present invention also relates to uses of a glass composition.

## Description

### FIELD OF THE INVENTION

The present invention relates to a glass composition. The present invention also relates to a method of forming a glass composition.

### BACKGROUND OF THE INVENTION

Cristobalite is a mineral obtained by calcination of pure silica sand at a temperature of approximately 1550°C; for example, at a temperature of from 1300°C to 1700°C.

At room temperature, silica sand is mainly composed of a mineralogical phase called α-quartz. When the α-quartz is heated to approximately 1550°C, the crystalline lattice of the α-quartz undergoes a phase change. Upon heating, α-quartz initially undergoes a phase change to form β-quartz. Upon further heating, β-quartz then forms tridymite and then, at higher temperatures (typically from 1300°C to 1700°C, at atmospheric pressure), cristobalite is formed.

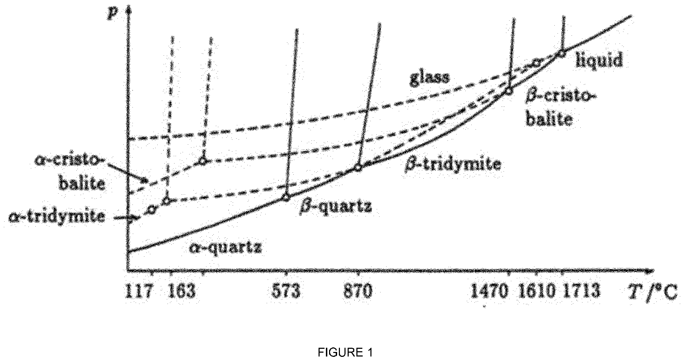

The different phases of silica at different temperatures and pressures are shown in the phase diagram depicted in Figure 1.

Cristobalite is chemically stable and mechanically strong. Commercial forms of cristobalite also have a high whiteness. Owing to its ease of manufacture, cristobalite is used in many applications. For example, cristobalite is used in engineering stone (e.g. work surfaces) and in paint.

In the engineering stone market (sometimes referred to as EGS), one of the biggest markets for cristobalite is in the production of kitchen countertops. The countertops are composed of a mineral filler and resin. The countertops typically comprise the mineral filler at a high percentage (up to 92 weight %), whilst one or more resins (optionally: 2K epoxy resins, for example Fugante^{™} Epoxy 2k; or, polyester resins, for example POLARIS polyester resin (produced by Ashland^{™})) are present in lower percentages (up to 8 weight %). Cristobalite, quartz, or, cristobalite and quartz, are often incorporated in the countertops as the mineral filler.

Typically, a countertop (composed of a mineral filler and resin) will require cutting prior to installation. A countertop is typically cut in a dry way with simple abrasion tools. This method of cutting the countertop generates dust that is composed of a mixture of the resin and mineral filler. The mineral dust may contain cristobalite, quartz, or, cristobalite and quartz. Cristobalite and quartz dust can lead to work related cell silicosis through inhalation.

Cristobalite, quartz, or cristobalite and quartz, are also used in paint compositions. Paint compositions typically comprise these minerals at from 10 to 20 weight %. Paint can be a source of airborne particles, for example these particles can be generated through spraying paint or dry sanding paint. The airborne particles may contain cristobalite, quartz, or, cristobalite and quartz. As discussed above, cristobalite and quartz airborne particles can lead to cell silicosis and lung cancer through inhalation.

Cristobalite and quartz have been investigated for carcinogenic properties when the minerals are dispersed in the air and therefore inhaled. The most dangerous particles are particles with a diameter below 10 µm and particles freshly generated from a high energy cutting process.

There is a need for beneficial glass compositions.

EP1544177B1 discloses thermal insulation comprising glass fibres, wherein (amongst other components) SiO₂ is present at from greater than 72 to less than 86 weight % and CaO is present at from greater than 14 to less than 28 weight %.

EP1725503 B1 discloses the formation of alkaline earth silicate glass fibres, wherein at least 75mol% of the alkali metal present is potassium (i.e. the sodium present is minimised).

There is a need for a glass composition to replace traditional glass compositions. In particular, there is a need for a glass composition to act as a filler and to replace cristobalite, quartz, or, cristobalite and quartz; or, reduce cristobalite, quartz, or, cristobalite and quartz to below 1% in compositions comprising a filler.

### SUMMARY OF THE INVENTION

The present invention discloses glass compositions which can act as a filler and be used to replace, in whole or in part, cristobalite, quartz, or, cristobalite and quartz.

The present invention relates to glass compositions that have the same or similar physical and colorimetric properties as cristobalite.

The present invention is as set out in the following clauses:
1. A glass composition, comprising:
   from 29 to 45 weight % CaO,
   from zero to 30 weight % MgO,
   from 41 to 65 weight % SiO₂, and
   any balance being unavoidable impurities.
2. The glass composition of clause 1, comprising:
   from 29 to 34 weight % CaO,
   from zero (or 1) to 10 weight % MgO,
   from 60 to 65 weight % SiO₂, and
   any balance being unavoidable impurities.
3. The glass composition of clause 1 or clause 2, comprising:
   from 29 to 30 weight % CaO,
   from zero (or 1) to 6 weight % MgO,
   from 60 to 65 weight % SiO₂, and
   any balance being unavoidable impurities.
4. The glass composition of any one of clauses 1 to 3, comprising:
   64.936 weight % SiO₂;
   29.258 weight % CaO; and,
   5.519 weight % MgO,
   the balance being other minerals and/or unavoidable impurities.
5. The glass composition of any one of clauses 1 to 4, wherein the glass composition is greater than 95% by weight amorphous, or greater than 98% by weight amorphous, or greater than 99% by weight amorphous.
6. The glass composition of any one of clauses 1 to 5, wherein the glass composition comprises cristobalite, quartz, or cristobalite and quartz, at less than 5 weight %, or less than 1 weight %.
7. The glass composition of any one of clauses 1 to 6, wherein the glass composition comprises trace amounts (less than 1 weight %, or less than 0.5 weight %, or less than 0.01 weight %) of wollastonite, diopside and/or calcium magnesium silicate.
8. The glass composition of any one of clauses 1 to 7, wherein the glass composition comprises:
   less than 0.05 weight % Fe₂O₃, and/or,
   less than 0.2 weight % Al₂O₃, and/or,
   less than 0.05 weight % TiO₂, and/or,
   less than 0.05 weight % K₂O, and/or,
   less than 0.05 weight % Na₂O, and/or,
   less than 0.02 weight % BaO, and/or,
   less than 0.02 weight % SrO, and/or,
   less than 0.005 weight % ZrO₂, and/or,
   less than 0.005 weight % Cr₂O₃, and/or,
   less than 0.01 weight % Mn₂O₃.
9. The glass composition of any one of clauses 1 to 8, wherein the glass composition is white or near white in colour.
10. The glass composition of any one of clauses 1 to 8, wherein the glass composition has the CIELAB colorimetric parameters: from 90 to 100 (L); from -0.8 to +0.8 (a); from +0.4 to +2.0 (b).
11. The glass composition of clause 9 or clause 10, wherein the CIELAB colorimetric properties are measured on a HunterLab^{™} Miniscan XE Plus.
12. The glass composition of any one of clauses 1 to 11, wherein the glass composition comprises less than 65 weight % SiO₂.
13. The glass composition of any one of clauses 1 to 12, wherein the composition has a particle size distribution with a minimum particle size of 100 µm and a maximum particle size of 500 µm (in the form of a grit).
14. The glass composition of any one of clauses 1 to 12, wherein the composition has a particle size distribution with a maximum particle size of 45 µm (in the form of a flour).
15. A synthetic stone comprising the glass composition of any one of clauses 1 to 14
16. The synthetic stone of clause 15, wherein the synthetic stone further comprises a resin.
17. The synthetic stone of clause 16, wherein the synthetic stone comprises 80 to 92 weight % glass composition and 8 to 20 weight % resin.
18. The synthetic stone of clause 16 or clause 17, wherein the resin is an epoxy resin, a polyester resin or a polyurethane resin.
19. The synthetic stone of any one of clauses 16 to 18, wherein the resin is a 2K epoxy resin.
20. The synthetic stone of any one of clauses 15 to 19, wherein the synthetic stone is white or near white in colour.
21. The synthetic stone of any one of clauses 15 to 20, wherein the synthetic stone has the CIELAB colorimetric parameters: from 90 to 100 (L); from -0.8 to +0.8 (a); from +0.4 to +2.0 (b).
22. The synthetic stone of any one of clauses 15 to 21, wherein the CIELAB colorimetric properties are measured on a HunterLab^{™} Miniscan XE Plus.
23. A paint composition; or, an ink composition; or, a filtration medium; or, a ceramic composition; or, a dental composition; or, a biomedical composition; or, an implant material; or, a fuel cell; or a nuclear waste immobilization composition; comprising the glass composition of any one of clauses 1 to 14.
24. A method of forming a glass composition, comprising the following steps:
   providing quartz, burned lime and dolomite; or, quartz, calcium carbonate and dolomite and,
   heating the mixture to a temperature of 1400 to 1800 °C.
25. The method of clause 24, wherein each starting material is present in the following amounts: quartz from 40 to 80 weight %, burned lime from 10 to 30 weight % and dolomite from 10 to 30 weight %; or, quartz from 40 to 80 weight %, calcium carbonate from 10 to 30 weight % and dolomite from 10 to 30 weight %.
26. The method of clause 24 or clause 25, wherein each starting material is present in the following amounts: quartz 58.09 weight % ± 10 weight %, burned lime 20.12 weight % ± 10 weight % and dolomite 21.79 weight % ± 10 weight %; or, quartz 58.09 weight % ± 10 weight %, calcium carbonate 20.12 weight % ± 10 weight % and dolomite 21.79 weight % ± 10 weight %.
27. The method of any one of clauses 24 to 26, wherein the heating step occurs for from 50 to 70 minutes; or, 60 minutes.
28. A glass composition obtained by, or obtainable by, the method of any one of clauses 24 to 27.

### BRIEF DESCRIPTION OF THE FIGURES

Embodiments of the invention are described below with reference to the accompanying drawings. The accompanying drawings illustrate various embodiments of systems, methods, and embodiments of various other aspects of the disclosure. Any person with ordinary skills in the art will appreciate that the illustrated element boundaries (e.g., boxes, groups of boxes, or other shapes) in the figures represent one example of the boundaries. It may be that in some examples one element may be designed as multiple elements or that multiple elements may be designed as one element. In some examples, an element shown as an internal component of one element may be implemented as an external component in another and vice versa. Furthermore, elements may not be drawn to scale. Non-limiting and non-exhaustive descriptions are described with reference to the following drawings. The components in the figures are not necessarily to scale, emphasis instead being placed upon illustrating principles.
Figure 1 is a phase diagram of silica at different temperatures and pressures.
Figure 2 is a photograph showing a visual comparison of two samples (A and B) on both a white background and a black background.
Figure 3 is a photograph showing a visual comparison of two samples (C and D) on both a white background and a black background.

### DETAILED DESCRIPTION OF THE INVENTION

Some embodiments of this disclosure, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present disclosure, the preferred systems and methods are now described.

Embodiments of the present disclosure will be described more fully hereinafter with reference to the accompanying drawings in which like numerals represent like elements throughout the several figures, and in which example embodiments are shown. Embodiments of the claims may, however, be embodied in many different forms and should not be construed as limited to the embodiments set forth herein. The examples set forth herein are non-limiting examples and are merely examples among other possible examples.

Some of the terms used to describe the present invention are set out below:
"Glass composition" refers to a mixture of minerals in the form of a glass which does not exist in nature.
"Cristobalite" refers to a mineral that is a high-temperature polymorph of quartz. One example of cristobalite is cristobalite grit SIBELITE^{®} M72T (from Sibelco^{®}). Cristobalite grit M72T is industrially produced. Cristobalite grit M72T is commonly used as a starting material for engineering stone and paint applications. Cristobalite grit M72T is referred to as a grit because it has a particle size distribution with a minimum particle size of 100 µm and a maximum particle size of 500 µm. Another example of cristobalite is cristobalite flour SIBELITE^{®} M3000 (from Sibelco^{®}). Cristobalite flour M3000 is referred to as a flour because it has a particle size distribution with a maximum particle size of 45 µm.
"Quartz" refers to a chemical compound consisting of one part silicon to two parts oxygen (SiO₂). One example of quartz is quartz M32 (from Sibelco^{®}). Quartz M32 refers to a silica sand which is industrially processed. Quartz M32 is referred to as a sand because it has a particle size distribution with a minimum particle size of 63 µm and a maximum particle size of 1000 µm. The mineral is commonly used as a starting material for the glass, crystal or ceramic industries as a source of silica in foundries, tile glues, plasters, mortars or coatings.
"Dolomite" refers to a mineral with the formula CaMg(CO₃)₂. Dolomite D-120 (from Sibelco^{®}) refers to an anhydrous carbonate mineral composed of calcium magnesium carbonate. Dolomite D-120 is industrially produced.
"Burned lime" refers to a mineral formed from the calcination of limestone (calcium carbonate). "Burned lime" (which is sometimes referred to as quicklime) has the formula CaO. Burned lime nekafin^{®} 0 (from Kalkfabrik Netstal AG) refers to one example of burned lime. "Burned lime" is industrially produced.
"Calcium carbonate" refers to a mineral with the formula CaCO₃. "Calcite" refers to a polymorph of calcium carbonate with the formula CaCO₃. Calcium carbonate from Gimat S.a.s. is one example of calcium carbonate. Calcite can be industrially produced.
"CIELAB colour space" refers to colour space defined by the International Commission on Illumination. It expresses colour as three numerical values: L (lightness); a (green-red colour components); and, b (blue-yellow components).
"White" refers to a colour expressed using CIELAB colour space coordinates. White has the parameters: 100 (L), 0 (a), 0 (b).
"Near white" refers to a colour expressed using CIELAB colour space coordinates. Near white has the CIELAB colour space coordinates from 90 to below 100 (L), from -0,5 to +0,5 (a), from 0 to 4 (b).
"LOI" refers to loss on ignition. This measurement is conducted by strongly heating a sample of the mineral at a specified temperature and allowing any volatile substances to escape. This will continue until the mass of the mineral stops changing. The value of LOI represents the mass of moisture and volatile material present in a sample.
"Weight %" refers to the percentage weight in grams of a component of a composition in every 100 grams of a composition. For example, if a mineral composition contains quartz at 25 weight %, then there is 25 g of quartz for every 100 g of the mineral composition.
"Unavoidable impurities" refers to components present in a composition which do not affect the properties of the composition. Unavoidable impurities are present in a composition at: less than 5 weight %; or, less than 4 weight %; or, less than 3 weight %; or, less than 2 weight %; or, less than 1 weight %; or less than 0.5 weight %; or less than 0.1 weight %.

### Formation of glass compositions

In some examples of the present invention, a glass composition is formed from quartz, dolomite and burned lime.

Alternatively, in other examples of the present invention, the burned lime can be replaced with calcium carbonate.

In examples of the present invention, the quartz is provided at 58.09 weight %. In other examples, the quartz is provided at from 40 to 80 weight %, or from 50 to 70 weight %, or from 56 to 60 weight %. In this example of the present invention, the quartz is provided at 98 % pure. In other examples, the quartz is provided at from 96 to 100 % pure.

In examples of the present invention, the dolomite is provided at 21.79 weight %. In other examples, the dolomite is provided at from 10 to 30 weight %, or from 15 to 25 weight %, or from 21 to 23 weight %. In this example of the present invention, the dolomite is provided at 96 % pure. In other examples, the dolomite is provided at from 92 to 100 % pure.

In examples of the present invention, the burned lime is provided at 20.12 weight %. In other examples, the burned lime is provided at from 10 to 30 weight %, or from 15 to 25 weight %, or from 19 to 21 weight %. In this example of the present invention, the burned lime is provided at 96 % pure. In other examples, the burned lime is provided at from 92 to 100 % pure.

In alternative examples of the present invention, calcium carbonate can be used instead of burned lime. In this example of the present invention the calcium carbonate is provided at 20.12 weight %. In other examples, the calcium carbonate is provided at from 10 to 30 weight %, or from 15 to 25 weight %, or from 19 to 21 weight %. In this example of the present invention, the calcium carbonate is provided at 96 % pure. In other examples, the calcium carbonate is provided at from 92 to 100 % pure.

In an example, the starting materials were provided as follows: 1161.8 g quartz, 435.8 g dolomite and 402.4 g burned lime. In other examples, the starting materials for the glass composition may be present at from 950 to 1350 g quartz, 350 to 550 g dolomite and 300 to 500 g burned lime.

In this example, the ratio of starting materials to glass composition is 1.13 (i.e. 2000 g of starting materials produces 1770 g of example glass composition). In other examples, the ratio of starting materials to final glass composition may be less than 1.13, for example 1.0, or 1.05, or 1.1. In other examples, the ratio of starting materials to final glass composition may be higher than 1.13, for example 1.2, or 1.25, or 1.3.

In this example, the starting materials were mixed.

Optionally, the starting materials were mixed in a tumble mixer.

In examples, the starting materials were mixed for 15 minutes. In other examples, the time of mixing may be less than 15 minutes, for example from 0 to 5 minutes, or from 5 to 10 minutes, or from 10 to 15 minutes. In other examples, the time of mixing may be higher than 15 minutes, for example from 15 to 20 minutes, or from 20 to 25 minutes, or from 25 to 30 minutes.

In this example, the starting materials underwent calcination. The starting materials were melted together to form a molten composition.

Optionally, the starting materials were melted together using a kiln, optionally a static kiln, optionally a Nobertherm Static Kiln.

Optionally, the starting materials were melted together in a platinum crucible.

In this example, the starting materials were melted together for 4 hours. In other examples, the time of melting the starting materials may be from 2 to 6 hours; or from 2.5 to 5.5 hours; or from 3 to 5 hours; or from 3.5 to 4.5 hours.

In this example, the starting materials were melted together in a platinum crucible at from 1400 to 1700 °C, preferably at 1550 °C. The temperature at which the starting materials were melted together may be less than 1550 °C, for example from 1150 to 1350 °C, or for example from 1350 to 1550 °C. The temperature at which the starting materials were melted together may be greater than 1550 °C, for example from 1550 to 17500 °C, or from 1750 to 1950 °C.

Upon melting, the starting materials form an amorphous phase comprising glass. The amorphous phase comprising glass may comprise 98 % glass. In other examples, the amorphous phase comprising glass may be less than 98 % glass, for example from 90 to 94 % glass, or from 94 to 98 % glass. In other examples, the amorphous phase comprising glass may be higher than 98 % glass, for example from 98 to 99 % glass, or from 99 to 100 % glass.

In this example, the molten composition formed from the melted starting materials is exposed to a thermal gradient, for example by being poured into water, to form GC1 by thermal shock.

### Composition of the example glass compositions

In examples of the present invention, glass compositions are composed of a mixture of minerals. The example glass compositions comprise an amorphous phase comprising glass. The amorphous phase comprising glass is the main mineral of the example glass compositions; for example, at 99 weight %. In other examples, the amorphous glass may be present at from 90 to 100 weight %, or from 95 to 100 weight %.

In examples, the glass compositions may also comprise quartz, cristobalite or quartz and cristobalite. Quartz, cristobalite or quartz and cristobalite may be present at 1 weight %. In other examples Quartz, cristobalite or quartz and cristobalite may be present at less than 1 weight %, for example at from 0.5 to 0.1 weight %, or from 0.3 to 0.1 weight %. In other examples quartz and cristobalite may be present at higher than 1 weight %, for example from 1 to 10 weight %, or from 1 to 5 weight %.

In examples of the present invention, the glass compositions may also comprise trace amounts of wollastonite, diopside and/or calcium magnesium silicate.

In examples of the present invention, the glass compositions comprise a mixture of chemicals. The example glass compositions comprise SiO₂. SiO₂ is the main chemical constituent of the example glass compositions, for example at 64.936 weight %. In other examples, SiO₂ may be present at from 41 to 65 weight %, or from 35 to 70 weight %, or from 35 to 75 weight %.

In examples of the present invention, the glass compositions also comprises CaO. CaO may be present at 29.258 weight %. In other examples CaO may be present at from 29 to 45 weight %, or from 25 to 50 weight %, or from 20 to 55 weight %.

In examples of the present invention, the glass compositions also comprises MgO. MgO may be present at 5.519 weight %. In other examples MgO may be present at from 0 to 30 weight %, or from 0 to 35 weight %, or from 0 to 40 weight %.

In examples of the present invention, the glass compositions may also comprise Fe₂O₃, Al₂O₃, TiO₂, K₂O, Na₂O, BaO, SrO, ZrO₂, Cr₂O₃, Mn₂O₃ and/or SO₃. The chemicals Fe₂O₃, Al₂O₃, TiO₂, K₂O, Na₂O, BaO, SrO, ZrO₂, Cr₂O₃, Mn₂O₃ and/or SO₃ may be present at a total of 0.289 weight %. In other examples, the chemicals Fe₂O₃, Al₂O₃, TiO₂, K₂O, Na₂O, BaO, SrO, ZrO₂, Cr₂O₃, Mn₂O₃ and/or SO₃ may be present at a total less than 0.289 weight %, for example at from 0.05 to 0.1 weight %, or from 0.1 to 0.15 weight %, or from 0.15 to 0.2 weight %, or from 0.2 to 0.289 weight %. In other examples, the chemicals Fe₂O₃, Al₂O₃, TiO₂, K₂O, Na₂O, BaO, SrO, ZrO₂, Cr₂O₃, Mn₂O₃ and/or SO₃ may be present at a total higher than 0.289 weight %, for example at from 0.289 to 0.3 weight %, or from 0.3 to 0.35 weight %, or from 0.35 to 0.4 weight %, or from 0.4 to 0.45 weight %.

In some examples, the glass compositions have a chemical composition according to Table 1.

**Table 1: Example glass compositions.**

| **Chemical** | **Weight %** |
|---|---|
| SiO₂ | From 41 to 65 |
| Al₂O₃ | Less than 0.2 |
| TiO₂ | Less than 0.05 |
| Fe₂O₃ | Less than 0.05 |
| CaO | From 29 to 45 |
| MgO | From 0 to 30 |
| Na₂O | Less than 0.05 |
| K₂O | Less than 0.05 |
| BaO | Less than 0.02 |
| SrO | Less than 0.02 |
| ZrO₂ | Less than 0.005 |
| Cr₂O₃ | Less than 0.005 |
| Mn₂O₃ | Less than 0.01 |

Glass compositions according to the present invention can be used as a filler and mitigate carcinogenic effects when compared to other minerals used as a filler, for example quartz and cristobalite.

Glass compositions according to the present invention are white or near white in colour.

Glass compositions according to the present invention are alkali free, or, comprise a trace of alkali components (where alkali includes Li, Na, K, Rb, Cs and Fr, and their oxides).

Glass compositions according to the present invention have the same or similar chemical and mechanical resistance properties as quartz and cristobalite.

The glass compositions of the present invention may be used in applications including bricks, pipes and roof tiles; ceramic bodies; craft pottery; frits, glazes and engobes; sanitary-ware; tiles; tableware; engineering stone; paint; and ink.

### Examples

The following is a non-limiting example that discusses, with reference to tables and figures, the advantages of glass composition.

### Example 1: Formation of a glass composition (GC1)

The following non-limiting example discusses the preparation of a glass composition (GC1) according to the presently claimed invention.

In this non-limiting example, GC1 was formed from three starting materials, namely, quartz (M32; from Sibelco^{®}), dolomite (D-120; from Sibelco^{®}) and burned lime (nekafin^{®} 0 from Kalkfabrik Netstal AG).

In this example, GC1 was formed according to a method comprising the steps of:
1. Chemical analysis of the starting materials;
2. Mineralogical analysis of the starting materials;
3. Determination of the weight composition of the starting materials;
4. Preparation of the starting materials;
5. Calcination of the starting materials to form a molten composition;
6. Characterisation of GC1;
7. Determining the colorimetric parameters of GC1.

Each step is discussed in more detail:

### Step 1. Chemical analysis of the starting materials

The chemical composition of the starting materials was analysed by applying x-ray fluorescence (XRF) techniques.

In addition, the LOI of each starting material was analysed on a laboratory muffle furnace. The furnace was heated by 10°C every minute until 1000°C was reached. The end environment was maintained for 30 minutes.

Table 2 outlines the results for the chemical composition and LOI analysis of the starting materials used to form GC1.

Table 2 also outlines the results for the chemical composition and LOI analysis of calcium carbonate. Calcium carbonate can be used as an alternative to burned lime.

**Table 2: The chemical composition and LOI of the starting materials used to form GC1.**

| | **Chemical Composition (Weight %)** | | | | | | | | |
|---|---|---|---|---|---|---|---|---|---|
| **Starting material** | **SiO₂** | **Al₂O₃** | **TiO₂** | **Fe₂O₃** | **CaO** | **MgO** | **Na₂O** | **K₂O** | **LOI** |
| Quartz M32 | 98.50 | 0.80 | 0.04 | 0.06 | 0.06 | 0.06 | 0.01 | 0.20 | 0.00 |
| Dolomite D-120 | 0.50 | 0.02 | 0.00 | 0.03 | 30.41 | 21.90 | 0.00 | 0.00 | 47.14 |
| Burned lime nekafin^{®} 0 | 0.01 | 0.03 | 0.00 | 0.02 | 96.80 | 0.5 | 0.00 | 0.00 | 2.64 |
| Calcium carbonate | 0.60 | 0.01 | 0.06 | 0.09 | 59.64 | 0.01 | 0.01 | 0.10 | 39.48 |

With reference to Table 2, the most common chemical in the quartz M32 is SiO₂ (98.5 weight %). With reference to Table 2, the most common chemical in the dolomite D-120 is CaO (30.41 weight %), and then MgO (21.90 weight %); with 47.14 LOI. With reference to Table 2, the most common chemical in burned lime and calcium carbonate is CaO (96.80 and 59.64 weight %, respectively).

### Step 2. Mineralogical analysis of the starting materials

The mineralogy of the starting materials was analysed by applying X-ray diffraction techniques. Table 3 shows the purity of each mineral as a percentage of total weight.

**Table 3: The mineralogy of the starting materials used to form GC1.**

| | **Mineral present** | **XRD Analysis (Weight %)** |
|---|---|---|
| Dolomite (D-120) | Dolomite | 96 |
| | Other | 4 |
| Quartz (M32) | Quartz | 98 |
| | Other | 2 |
| Burned lime (nekafin^{®} 0) | Burned lime | 96 |
| | Other | 4 |
| Calcium carbonate | Calcite | 96 |
| | Other | 4 |

With reference to Table 3, quartz M32 has a purity of 98 weight %. With reference to Table 3, dolomite D-120, burned lime (nekafin^{®} 0) and calcium carbonate have a purity of 96 weight %. All starting materials have a purity of 96 weight % or greater.

### Step 3. Weight composition of the starting materials

Table 4 shows the formulation of GC1 before the starting materials were melted together.

Calcium carbonate can be used as an alternative to burned lime. Therefore, if calcium carbonate is used to for GC1, the same weight % as burned lime is used for calcium carbonate.

**Table 4: Formulation of the GC1 before the starting materials were melted together.**

| **Starting material** | **Weight %** |
|---|---|
| Quartz (M32) | 58.09 |
| Dolomite (D-120) | 21.79 |
| Burned lime (nekafin^{®} 0) | 20.12 |

With reference to Table 4, quartz (M32) is the main starting material in GC1 at 58.09 weight %. The formulation also includes dolomite (D-120) and burned lime (nekafin^{®} 0) at 21.70 and 20.12 weight %, respectively.

### Step 4. Preparation of the starting materials

The starting materials were weighed on an ORMA Technology Balance. Quartz M32 (1161.5 g), dolomite D-120 (435.8 g) and burned lime (nekafin^{®} 0) (402.4 g) were weighed and placed inside a platinum crucible.

The capacity of the platinum crucible was 1 litre, and a total of 80 g of the starting materials were placed inside the platinum crucible.

The platinum crucible and its contents were placed inside a tumble mixer, and mixed for 15 minutes.

The conditions required to prepare the starting materials were set for a laboratory experiment. In other examples, the conditions may change for an industrial scale method.

### Step 5. Calcination of the starting materials to form a molten composition

In this example, the starting materials were melted in the Nobertherm Static Kiln. The maximum temperature the Nobertherm Static Kiln could reach was 1650°C.

The platinum crucible (containing the mixed starting materials) was placed inside the Nobertherm Static Kiln. The temperature was increased 10°C every minute until a maximum temperature of 1550°C was reached. This maximum temperature of the kiln was maintained for a period of 4 hours to form a molten composition.

At the end of the 4 hours, the crucible (containing the molten composition) was removed from the kiln. The molten composition was exposed to a thermal gradient, by being poured into water, to form GC1.

The conditions required to form GC1 were set for a laboratory experiment. In other examples, the conditions may change for an industrial scale method.

### Step 6. Characterisation of GC1

GC1 was characterised. Additionally, the colorimetric properties of GC1 were determined.

The chemical composition of GC1 was determined by XRF analysis. The results are shown in Table 5.

**Table 5: The chemical composition of GC1.**

| **Chemical** | **Weight %** | **Chemical** | **Molar concentration %** |
|---|---|---|---|
| SiO₂ | 64.936 | SiO₂ | 62.032 |
| Al₂O₃ | 0.140 | Al₂O₃ | 0.079 |
| TiO₂ | 0.017 | TiO₂ | 0.012 |
| Fe₂O₃ | 0.032 | Fe₂O₃ | 0.011 |
| CaO | 29.258 | CaO | 29.945 |
| MgO | 5.519 | MgO | 7.858 |
| Na₂O | 0.026 | Na₂O | 0.024 |
| K₂O | 0.037 | K₂O | 0.022 |
| BaO | 0.010 | BaO | 0.004 |
| SrO | 0.011 | SrO | 0.006 |
| ZrO₂ | 0.004 | ZrO₂ | 0.002 |
| Cr₂O₃ | 0.003 | Cr₂O₃ | 0.001 |
| Mn₂O₃ | 0.009 | Mn₂O₃ | 0.003 |

With reference to Table 5, the most common chemical in GC1 is SiO₂. With reference to Table 5, the second most common chemical in GC1 is CaO.

The mineral composition of GC1 was determined by XRD (X-ray diffraction) analysis and is shown in Table 6.

**Table 6: The mineralogy of GC1.**

| **Mineral** | **Weight %** |
|---|---|
| Quartz and cristobalite | <1.0 |
| Amorphous phase comprising glass | >99.0 |

With reference to Table 6, the most common mineral in GC1 is an amorphous phase comprising glass.

### 7. Determining the colorimetric parameters of GC1

Colorimetric properties of GC1 were measured. The colorimetric parameters are defined by CIELAB. The parameter "b" is important when assessing colour. The higher the parameter "b" is, the more yellow the material is. This is important because the human eye is more sensitive to this colorimetric parameters compared to the others (blue, red, green, white, black). To determine the colour of the glass composition, colour-colorimetric and spherical coordinates were used with a set light of D65/10°. The measurement was done using a colorimeter, the model being a HunterLab^{™} Miniscan XE Plus.

Firstly, the colorimetric properties of GC1 were compared with the colorimetric parameters of cristobalite grit M72T (a grit which is used commercially as a mineral filler to form countertops composed of a mineral filler and resin).

To determine the colorimetric properties, 12 g of each sample were placed into a beaker and 8 g of epoxy resin Fugante^{™} Epoxy 2k was added. Each mixture was mixed in a Speed Mixer by HausChild for 60 seconds at 3000 rpm. The mixtures were then each poured into separate alumina cups for hardening. To harden the samples, they were left for 24 hours at a temperature of 35 °C. The colorimetric properties were measured once the sample had hardened.

**Table 7: Colorimetric parameters of GC1 grit (within epoxy resin) compared to cristobalite grit M72T (within epoxy resin).**

| **Parameter** | **GC1 grit** | **Cristobalite grit M72T** |
|---|---|---|
| L | 90.9 | 90.0 |
| a | -1.2 | -0.6 |
| b | 0.8 | 1.0 |

The GC1 tested in Table 7 was in grit form (a particle size distribution with a minimum particle size of 100 µm and a maximum particle size of 500 µm).

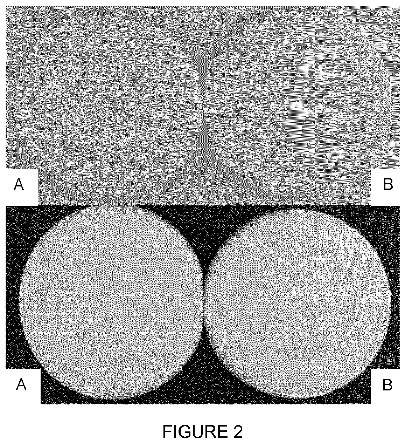

Figure 2 is a reference picture showing the samples tested in Table 7. The top line of pictures is taken on a white background (A is the M72T sample; B is the GC1 sample). The white background was used to better visualise the colorimetric properties in terms of whiteness (the L coordinate). The bottom line of pictures is taken on a black background (A is the M72T sample; B is the GC1 sample). The black background was used to better visualise the colorimetric properties in terms of any yellow colourings (the b coordinate). Samples A and B were found to have very similar colorimetric properties.

With reference to Table 7, GC1 grit has comparable colorimetric properties to cristobalite grit.

In a further experiment to determine the colorimetric properties, 57.8 g of each sample in grit form (GC1 grit or cristobalite M72T, respectively) were each mixed with 31.6 g of each component in flour form (GC1 flour or cristobalite flour SIBELITE^{®} M3000, respectively) and 10.6 g of epoxy resin Fugante^{™} Epoxy 2k. The flour of GC1 was obtained by grinding the GC1 grit. The mixtures were mixed in a Speed Mixer by HausChild for 25 seconds at 2500 rpm, and then compacted using a vibrating vacuum compactor. The vacuum compactor has a vacuum chamber inside a circular mould into which the mixture is poured. During the compression phase the vacuum compactor vibrates to help prevent the formation of bubbles. The sample was left inside the vacuum compactor for 24 hours. The colorimetric properties were then measured.

**Table 8: Colorimetric parameters of GC1 (flour + grit) compared to cristobalite grit M72T + M3000 flour (both within the same epoxy resin).**

| **Parameter** | **GC1 (flour + grit)** | **Cristobalite (M72T + M3000)** |
|---|---|---|
| L | 91.7 | 90.6 |
| a | -0.8 | -0.6 |
| b | 2.0 | 0.8 |

With reference to Table 8, the GC1 (flour + grit) when formulated with epoxy resin has comparable colorimetric properties to cristobalite (flour + grit).

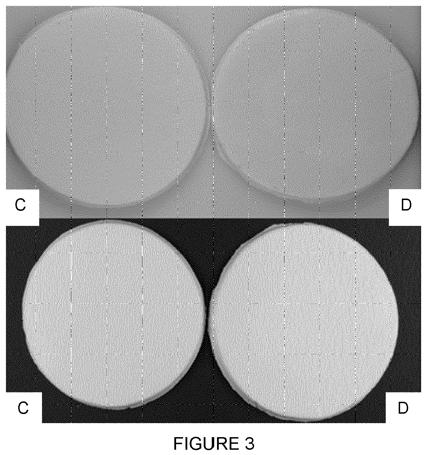

Figure 3 is a reference picture showing the samples tested in Table 8. The top line of pictures is taken on a white background (C is the M72T grit + M3000 flour sample; D is the GC1 grit + GC1 flour sample). The white background was used to better visualise the colorimetric properties in terms of whiteness (the L coordinate). The bottom line of pictures is taken on a black background (C is the M72T grit + M3000 flour sample; D is the GC1 grit + GC1 flour sample). The black background was used to better visualise the colorimetric properties in terms of any yellow colourings (the b coordinate). Samples C and D were found to have very similar colorimetric properties.

Quartz and cristobalite are present at less than 1 weight % in GC1 (see Table 6). Therefore, GC1 minimises carcinogenic activity (by minimising the presence of quartz and cristobalite) whilst at the same time giving similar or better colorimetric properties to cristobalite powder, flour and/or grit, when formulated in synthetic stone.

In these non-limiting examples, the resin combined with the mineral filler (GC1) is Fugante^{™} Epoxy 2k, which is an epoxy resin. Alternatively, the resin can be other epoxy resins, or a polyester resin, or a polyurethane resin. Non-limiting examples of polyester resins include AROPOL^{™} LP 67400 (produced by INEOS^{™}), orthophthalic (produced by Ashland^{™}), dicyclopentadiene (produced by Ashland^{™}), isophthalic (produced by Ashland^{™}) and POLARIS (produced by Ashland^{™}). Non-limiting examples of polyurethane resins include URETAN NR (produced by Cores^{™}) or PUCORE NG (produced by Cores^{™}). When forming a synthetic stone (for use in or as, for example, a kitchen countertop, facades, bathrooms or furniture) with mineral filler and resin, typically the amount of mineral filler is from 80 to 92 weight % and the amount of resin (optionally of the types listed previously) is from 8 to 20 weight %.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A glass composition, comprising:
from 29 to 45 weight % CaO,
from zero to 30 weight % MgO,
from 41 to 65 weight % SiO₂, and
any balance being unavoidable impurities.

2. The glass composition of claim 1, comprising:
from 29 to 34 weight % CaO,
from zero (or 1) to 10 weight % MgO,
from 60 to 65 weight % SiO₂, and
any balance being unavoidable impurities.

3. The glass composition of claim 1 or claim 2, comprising:
from 29 to 30 weight % CaO,
from zero (or 1) to 6 weight % MgO,
from 60 to 65 weight % SiO₂, and
any balance being unavoidable impurities.

4. The glass composition of any one of claims 1 to 3, comprising:
64.936 weight % SiO₂;
29.258 weight % CaO; and,
5.519 weight % MgO,
the balance being other minerals and/or unavoidable impurities.

5. The glass composition of any one of claims 1 to 4, wherein the glass composition is greater than 95% by weight amorphous, or greater than 98% by weight amorphous, or greater than 99% by weight amorphous.

6. The glass composition of any one of claims 1 to 5, wherein the glass composition comprises cristobalite, quartz, or cristobalite and quartz, at less than 5 weight %, or less than 1 weight %.

7. The glass composition of any one of claims 1 to 6, wherein the glass composition comprises trace amounts (less than 1 weight %, or less than 0.5 weight %, or less than 0.01 weight %) of wollastonite, diopside and/or calcium magnesium silicate.

8. The glass composition of any one of claims 1 to 7, wherein the glass composition comprises:
less than 0.05 weight % Fe₂O₃, and/or,
less than 0.2 weight % Al₂O₃, and/or,
less than 0.05 weight % TiO₂, and/or,
less than 0.05 weight % K₂O, and/or,
less than 0.05 weight % Na₂O, and/or,
less than 0.02 weight % BaO, and/or,
less than 0.02 weight % SrO, and/or,
less than 0.005 weight % ZrO₂, and/or,
less than 0.005 weight % Cr₂O₃, and/or,
less than 0.01 weight % Mn₂O₃.

9. The glass composition of any one of claims 1 to 8, wherein the glass composition is white or near white in colour; optionally, wherein the glass composition has the CIELAB colorimetric parameters: from 90 to 100 (L); from -0.8 to +0.8 (a); from +0.4 to +2.0 (b); optionally, wherein the CIELAB colorimetric properties are measured on a HunterLab^{™} Miniscan XE Plus.

10. The glass composition of any one of claims 1 to 9, wherein the glass composition comprises less than 65 weight % SiO₂.

11. The glass composition of any one of claims 1 to 10, wherein the composition:
has a particle size distribution with a minimum particle size of 100 µm and a maximum particle size of 500 µm (in the form of a grit); or,
has a particle size distribution with a maximum particle size of 45 µm (in the form of a flour).

12. A synthetic stone comprising the glass composition of any one of claims 1 to 11; optionally, wherein the synthetic stone further comprises a resin; optionally, wherein synthetic stone comprises 80 to 92 weight % glass composition and 8 to 20 weight % resin; optionally, wherein the resin is an epoxy resin, a polyester resin or a polyurethane resin; optionally, wherein the resin is a 2K epoxy resin.

13. The synthetic stone of claim 12, wherein the synthetic stone is white or near white in colour; optionally, wherein the synthetic stone has the CIELAB colorimetric parameters: from 90 to 100 (L); from -0.8 to +0.8 (a); from +0.4 to +2.0 (b); optionally, wherein the CIELAB colorimetric properties are measured on a HunterLab^{™} Miniscan XE Plus.

14. A paint composition; or, an ink composition; or, a filtration medium; or, a ceramic composition; or, a dental composition; or, a biomedical composition; or, an implant material; or, a fuel cell; or a nuclear waste immobilization composition; comprising the glass composition of any one of claims 1 to 11.

15. A method of forming a glass composition, comprising the following steps:
providing quartz, burned lime and dolomite; or, quartz, calcium carbonate and dolomite and,
heating the mixture to a temperature of 1400 to 1800 °C.

16. The method of claim 15, wherein each starting material is present in the following amounts: quartz from 40 to 80 weight %, burned lime from 10 to 30 weight % and dolomite from 10 to 30 weight %; or, quartz from 40 to 80 weight %, calcium carbonate from 10 to 30 weight % and dolomite from 10 to 30 weight %; optionally,
wherein each starting material is present in the following amounts: quartz 58.09 weight % ± 10 weight %, burned lime 20.12 weight % ± 10 weight % and dolomite 21.79 weight % ± 10 weight %; or, quartz 58.09 weight % ± 10 weight %, calcium carbonate 20.12 weight % ± 10 weight % and dolomite 21.79 weight % ± 10 weight %.

17. The method of any one of claims 15 or 16, wherein the heating step occurs for from 50 to 70 minutes; or, from 60 minutes to 600 minutes.

18. A glass composition obtained by, or obtainable by, the method of any one of claims 15 to 17.
